# EUROPEAN PATENT APPLICATION

(11) **EP 4 354 002 A1**
(43) Date of publication of application: **17.04.2024**
(21) Application number: 22819324.9
(22) Date of filing: 19.05.2022
(51) Int. Cl.: F16L 19/02, F16L 15/04

(54) **DISMANTLE-PREVENTION CONNECTOR**

(30) Priority: 11.06.2021 CN 202121318736 U
(71) Applicant: Zhejiang Dunan Artificial Environment Co., Ltd., Shaoxing, Zhejiang 311835 (CN)
(72) Inventor: FENG, Zhongbo, Shaoxing, Zhejiang 311835 (CN); CHEN, Diyong, Shaoxing, Zhejiang 311835 (CN); LOU, Feng, Shaoxing, Zhejiang 311835 (CN); ZHOU, Feng, Shaoxing, Zhejiang 311835 (CN)
(74) Representative: Inchingalo, Simona
(86) International application number: PCT/CN2022/093982
(87) International publication number: WO 2022/257726

(57) **Abstract**

An anti-disassembly connector, including: a connecting portion (10), where a threaded connecting section (11) is disposed on the connecting portion (10); and bosses (20), where the bosses (20) protrude from an end or a peripheral wall of the connecting portion (10), each of the bosses (20) extends along a circumferential edge or the peripheral wall of the connecting portion (10), each of the bosses (20) has a force-bearing surface (21) and a force-releasing surface (22) that are disposed opposite to each other, at least two bosses (20) are arranged, the two bosses (20) are disposed at intervals along the circumferential edge or the peripheral wall of the connecting portion (10), and a gap between two adjacent bosses (20) forms a clamping interval. A force-bearing sideline (211) is formed on a side of the force-bearing surface (21) away from an inner wall of the connecting portion (10), a length of the force-bearing sideline (211) is L, and 5 mm < L < 20 mm. The technical problem that a pipe joint is easily disassembled due to a misoperation in the art known to inventors can be solved by means of the anti-disassembly connector.

## Description

### Cross-Reference to Related Application

The present disclosure claims the priority of Chinese Patent Application No. 202121318736.5, filed on June 11, 2021 and entitled "Anti-disassembly connector", the contents of which are hereby incorporated by reference in its entirety.

### Technical Field

The disclosure relates to the technical field of stop valves, and particularly relates to an anti-disassembly connector.

### Background

At present, it is generally required to match and connect a pipe joint to a joint nut in order to weld an evaporator to a connecting pipe of an air conditioner in the art known to inventors, so as to facilitate rapid installation. However, the joint nut is likely to be disassembled from the pipe joint if misoperation occurs in a process of use, cleaning or maintenance, which causes leakage of a pipeline.

### Summary

A main objective of the disclosure is to provide an anti-disassembly connector, so as to solve the technical problem that a pipe joint is easily disassembled due to a misoperation in the art known to inventors.

In order to realize the above objective, the disclosure provides an anti-disassembly connector. The anti-disassembly connector includes: a connecting portion, where a threaded connecting section is disposed on the connecting portion; and bosses, the bosses protrude from an end of the connecting portion or a peripheral wall of the connecting portion, each of the bosses extends along a circumferential edge or a peripheral wall of the connecting portion, each of the bosses has a force-bearing surface and a force-releasing surface that are disposed opposite to each other, at least two bosses are arranged, two bosses are disposed at intervals along the circumferential edge of the connecting portion or the peripheral wall of the connecting portion, and a gap between two adjacent bosses forms a clamping interval; and a force-bearing sideline is formed on a side of the force-bearing surface away from an inner wall of the connecting portion, a length of the force-bearing sideline is L, and 5 mm < L < 20 mm.

In some embodiments, the force-bearing sideline is parallel to an axis of the connecting portion.

In some embodiments, the force-bearing surface is a flat surface, and the force-bearing surface is parallel to an axis of the connecting portion; and/or the force-releasing surface is a curved surface.

In some embodiments, the force-releasing surface is a curved surface, and the force-releasing surface recesses toward an interior of a boss.

In some embodiments, an included angle between the force-releasing surface and a radial section of the connecting portion is α, and 20° ≤ α ≤ 50°.

In some embodiments, a junction of the force-bearing surface and the connecting portion is a circular arc transition; and/or a junction of the force-releasing surface and the connecting portion is a circular arc transition.

In some embodiments, each of the bosses further includes an outer cambered surface, the outer cambered surface is disposed between the force-bearing surface and the force-releasing surface, and a junction between the outer cambered surface and the force-releasing surface is a circular arc transition.

In some embodiments, each of the bosses has a reinforcing portion, a reinforcing end face is formed at an end of the reinforcing portion away from the threaded connecting section, and the reinforcing end face is parallel to an end face of the connecting portion; and a machining plane is disposed at the clamping interval close to the threaded connecting section and facing the reinforcing end face, and the machining plane is parallel to the reinforcing end face.

In some embodiments, two bosses are arranged, and the two bosses are symmetrically disposed at the end of the connecting portion or the circumferential edge of the connecting portion.

In some embodiments, an anti-disassembly connector is provided. The anti-disassembly connector includes: a connecting portion, where a threaded connecting section is disposed on the connecting portion; and a boss, the boss protrudes from a peripheral wall of the connecting portion, the boss extends along a circumferential edge of the connecting portion or the peripheral wall of the connecting portion, the boss has a force-bearing surface and a force-releasing surface that are disposed opposite to each other, at least one boss is arranged, and a gap between the boss and the connecting portion forms a clamping interval; and a force-bearing sideline is formed on a side of the force-bearing surface away from an inner wall of the connecting portion, a length of the force-bearing sideline is L, and 5 mm < L < 20 mm.

By employing the technical solution of the disclosure, an operating tool acts on the force-bearing surface during specific operation such that the threaded connecting section of the connecting portion can be in threaded connection with a first connector. After the anti-disassembly connector is installed on the first connector, if the operating tool acts on the force-bearing surface, only an anti-disassembly sleeve can be screwed to the first connector; and if the operating tool acts on the force-releasing surface, a force acting on the force-releasing surface cannot act on the connecting portion such that the connecting portion cannot be smoothly disassembled by means of the operating tool, and an anti-disassembly function can be effectively achieved. Therefore, the technical problem that a pipe joint is easily disassembled due to a misoperation in the art known to inventors can be solved by means of the anti- disassembly sleeve in the disclosure.

### Brief Description of the Drawings

Accompanying drawings of the description serve as a constituent part of the disclosure to provide a further understanding of the disclosure. Examples of the disclosure and their descriptions serve to explain the disclosure, and are not to be construed as unduly limiting the disclosure. In figures:
Fig. 1 illustrates a schematic structural diagram of an anti-disassembly connector according to Example 1 of the disclosure;
Fig. 2 illustrates a schematic structural diagram from another angle of the anti-disassembly connector according to Example 1 of the disclosure;
Fig. 3 illustrates a schematic structural diagram of the anti-disassembly connector of which a junction between a force-bearing surface and a connecting portion is a circular arc transition according to Example 1 of the disclosure;
Fig. 4 illustrates a schematic structural diagram from another angle of the anti-disassembly connector of which the junction between the force-bearing surface and the connecting portion is a circular arc transition according to Example 1 of the disclosure;
Fig. 5 illustrates a front view of the anti-disassembly connector of which the junction between the force-bearing surface and the connecting portion is a circular arc transition according to Example 1 of the disclosure;
Fig. 6 illustrates a top view of the anti-disassembly connector of which the junction between the force-bearing surface and the connecting portion is a circular arc transition according to Example 1 of the disclosure;
Fig. 7 illustrates a semi-sectional view of the anti-disassembly connector according to Example 1 of the disclosure;
Fig. 8 illustrates a right side view of the anti-disassembly connector according to Example 1 of the disclosure;
Fig. 9 illustrates a schematic diagram of a mounting structure of the anti-disassembly connector according to Example 1 of the disclosure;
Fig. 10 illustrates a front view of the mounting structure of the anti-disassembly connector according to Example 1 of the disclosure; and
Fig. 11 illustrates a sectional view of the mounting structure of the anti-disassembly connector according to Example 1 of the disclosure.

The above figures include reference numerals as follows:
10. connecting portion, 11. threaded connecting section, 12. chamfer, 13. machining plane, 20. boss, 21. force-bearing surface, 211. force-bearing sideline, 22. force-releasing surface, 23. outer cambered surface, 24. reinforcing end face, 30. first connector, 40. second connector, and 50. circular arc transition.

### Detailed Description of the Embodiments

It should be noted that examples of the disclosure and features in the examples can be combined with one another if there is no conflict. The disclosure will be described in detail below with reference to accompanying drawings and in combination with examples.

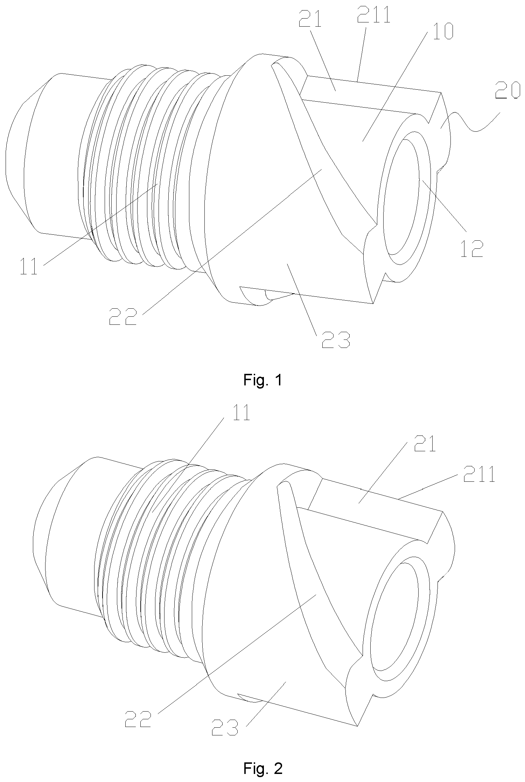

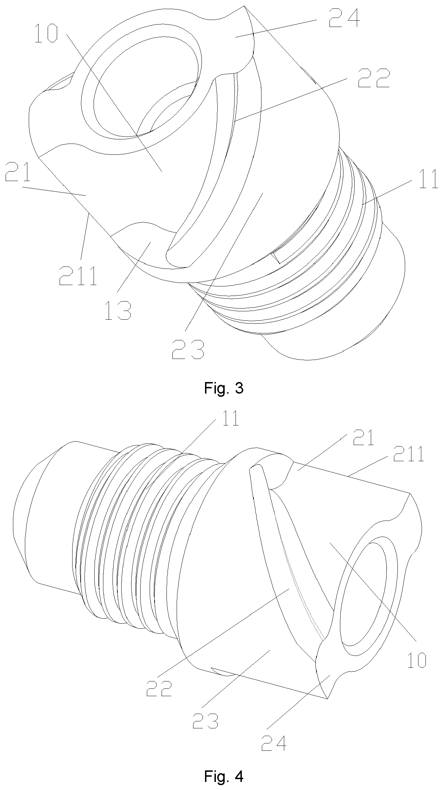

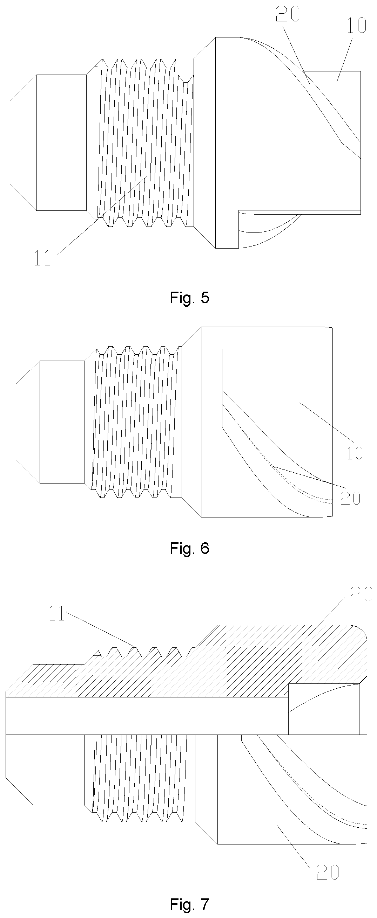

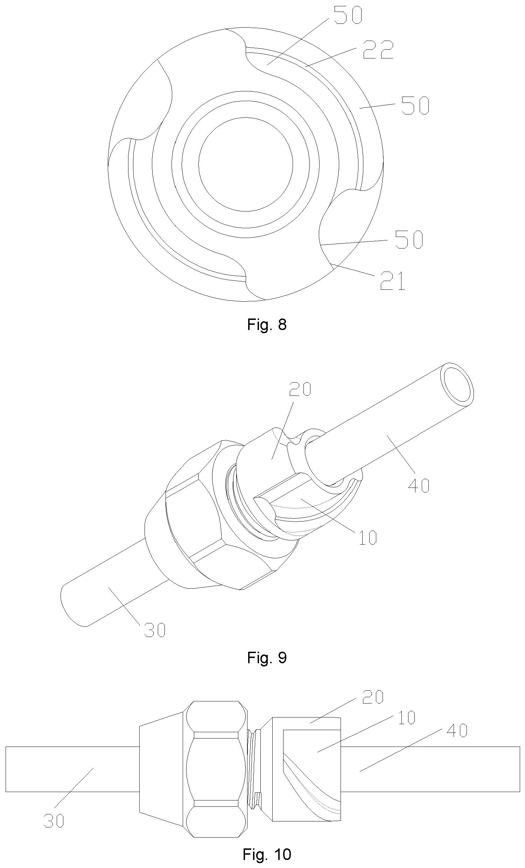

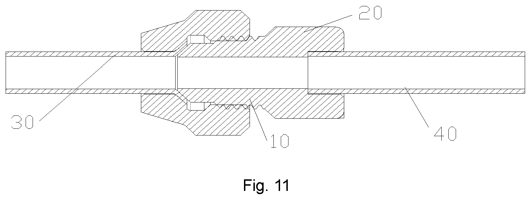

As shown in Figs. 1-11, Embodiment 1 of the disclosure provides an anti-disassembly connector. The anti-disassembly connector includes a connecting portion 10 and bosses 20, and a threaded connecting section 11 is disposed on the connecting portion 10. Each of the bosses 20 protrudes from an end of the connecting portion 10 or a peripheral wall of the connecting portion 10, each of the bosses 20 extends along a circumferential edge of the connecting portion 10 or the peripheral wall of the connecting portion 10, each of the bosses 20 has a force-bearing surface 21 and a force-releasing surface 22 that are disposed opposite to each other, at least two bosses 20 are arranged, two bosses 20 are disposed at intervals along the circumferential edge of the connecting portion 10 or the peripheral wall of the connecting portion 10, and a gap between two adjacent bosses 20 forms a clamping interval; and a force-bearing sideline 211 is formed on a side of the force-bearing surface 21 away from an inner wall of the connecting portion 10, a length of the force-bearing sideline 211 is L, and 5 mm < L < 20 mm. In some embodiments, the bosses 20 of the anti-disassembly connector shown in the drawings are disposed on the peripheral wall of the connecting portion 10.

By means of the anti-disassembly connector provided in some embodiments, an operating tool acts on the force-bearing surface 21 during specific operation such that the threaded connecting section 11 of the connecting portion 10 can be in threaded connection to a first connector 30. After the anti-disassembly connector is installed on the first connector 30, if the operating tool acts on the force-bearing surface 21, only an anti-disassembly sleeve can be screwed to the first connector 30; and if the operating tool acts on the force-releasing surface 22, a force acting on the force-releasing surface 22 cannot act on the connecting portion 10 such that the connecting portion 10 cannot be smoothly disassembled by means of the operating tool, and an anti-disassembly function can be effectively achieved. In some embodiments, in a case that the operating tool is a special tool, the operating tool leans against the force-bearing surface 21 to apply a force to the force-bearing surface 21 such that the anti-disassembly connector can be screwed. When the operating tool reversely operates to act on the force-releasing surface 22, the operating tool deviates from the anti-disassembly connector along the force-releasing surface 22 such that the anti-disassembly connector cannot be disassembled.

In some embodiments, in a case that the operating tool is an adjustable spanner, when operating tool performs a tightening operation, the operating tool (in some embodiments, the operating tool is an adjustable spanner) acts on and clamps two force-bearing sidelines 211. By setting the length of the force-bearing sideline 211 within the above range, contact positions between the operating tool and the force-bearing sidelines 211 is ensured, stable force application of the operating tool is ensured, and stability of operation is improved. When performing a reverse operation on the force-bearing sidelines 211, the operating tool will deviate from the two force-bearing sidelines 211 such that disassembly cannot be achieved. Therefore, the technical problem that a pipe joint is easily disassembled due to a misoperation in the art known to inventors can be solved by means of the anti-disassembly sleeve. It can be understood that if the force-bearing sidelines 211 are too short, the adjustable spanner cannot be used for operation; and if the force-bearing sidelines 211 are too long, an anti-disassembly function cannot be achieved.

In some embodiments, the force-bearing sideline 211 is parallel to an axis of the connecting portion 10. Through such structure arrangement, jamming or unclamping can be avoided during screwing of the connecting portion 10, and convenience of operation can be improved.

In some embodiments, the force-bearing surface 21 is a flat surface, and the force-bearing surface 21 is parallel to the axis of the connecting portion 10 such that screwing can be convenient. Or the force-releasing surface 22 is a curved surface such that the operating tool can be conveniently deviated from the operating tool along the force-releasing surface 22, and effective force release can be ensured. Or the force-bearing surface 21 is a flat surface, and the force-bearing surface 21 is parallel to the axis of the connecting portion 10; and the force-releasing surface 22 is a curved surface.

In some embodiments, the force-bearing surface 21 is a flat surface, and the force-bearing surface 21 is parallel to the axis of the connecting portion 10. In this way, only the force-bearing sidelines 211 of the force-bearing surface 21 can make contact with the operating tool, and other parts of the force-bearing surface 21 can be prevented from making contact with the operating tool, such that convenience of operation is improved.

In some embodiments, the force-releasing surface 22 is a curved surface, and the force-releasing surface 22 recesses toward an interior of a boss 20. Through such structure arrangement, the force-releasing surface can be better deviated from the operating tool conveniently, and the anti- disassembly function can be better achieved.

In some embodiments, an included angle between the force-releasing surface 22 and a radial section of the connecting portion 10 is α, α is less than 60°, and in some embodiments, 20° ≤ α ≤ 50°. That is, an included angle between the force-releasing surface 22 and the radial section on a projection surface of an axial section is α, α is less than 60°, and in some embodiments, 20° ≤ α ≤50°; or it can be understood that an included angle between a tangent of the force-releasing surface 22 and the axis of the connecting portion 10 is α. Through such structure arrangement, the anti- disassembly function can be better achieved.

In some embodiments, a junction between the force-bearing surface 21 and the connecting portion 10 is a circular arc transition 50. Or a junction between the force-releasing surface 22 and the connecting portion 10 is a circular arc transition 50. Or a junction between the force-bearing surface 21 and the connecting portion 10 is a circular arc transition 50, and a junction between the force-releasing surface 22 and the connecting portion 10 is a circular arc transition 50.

In some embodiments, the junction between the force-bearing surface 21 and the connecting portion 10 is a circular arc transition 50, and the junction between the force-releasing surface 22 and the connecting portion 10 is a circular arc transition 50. Through such structure arrangement, stress concentration can be prevented from occurring at the junction between the force-bearing surface 21 and the connecting portion 10 and the junction between the force-releasing surface 22 and the connecting portion 10, and internal performance of the structure can be improved.

In some embodiments, each of the bosses 20 further includes an outer cambered surface 23, the outer cambered surface 23 is disposed between the force-bearing surface 21 and the force-releasing surface 22, and a junction between the outer cambered surface 23 and the force-releasing surface 22 is a circular arc transition 50. In this way, stress concentration can be prevented from occurring at the junction between the outer cambered surface 23 and the force-releasing surface 22. Moreover, the anti-disassembly function can be better achieved.

In some embodiments, each of the bosses 20 has a reinforcing portion, a reinforcing end face 24 is formed at an end of the boss 20 away from the threaded connecting section 11 by means of the reinforcing portion, and the reinforcing end face 24 is parallel to an end face of the connecting portion 10. A clamping interval is formed between two adjacent bosses 20, a machining plane 13 is disposed at the clamping interval close to the threaded connecting section 11 and facing the reinforcing end face 24, and the machining plane 13 is parallel to the reinforcing end face 24 such that machining can be convenient.

In some embodiments, the connecting portion 10 is a connecting pipe, the threaded connecting section 11 is disposed on a peripheral wall of the connecting pipe, and the threaded connecting section 11 and the bosses 20 are disposed at intervals. The anti-disassembly connector further includes a chamfer 12, the chamfer 12 is disposed on an inner wall of the connecting pipe, and the chamfer 12 is disposed at an end of the connecting pipe close to the boss 20, and is used for prearrangement of a welding ring when being welded to a second connector 40. Through such structure arrangement, the threaded connecting section 11 is connected with the first connector 30, and the anti-disassembly connector is welded to the second connector 40 such that a flow passage in the first connector 30 can be conveniently in communication with a flow passage in the second connector 40. In some embodiments, the first connector 30 includes a connecting pipe and a nut, the nut sleeves the connecting pipe and is in threaded connection with the anti-disassembly connector, a flared section is disposed at an end of the connecting pipe close to the anti-disassembly connector, and the flared section is disposed between the nut and the anti-disassembly connector and abuts against the nut and the anti-disassembly connector for sealing.

In some embodiments, a thickness of the boss 20 is greater than a thickness of a pipe wall of the connecting pipe, such that strength of the boss and the connecting pipe is ensured. In some embodiments, the reinforcing portion is formed at a portion where the thickness of the boss 20 is greater than the thickness of the pipe wall of the connecting pipe. The outer cambered surfaces 23 of the two bosses are circular arc surfaces. In some embodiments, the anti-disassembly connector is an integrally-formed structure, and a machining plane is provided between two adjacent bosses such that machining can be convenient. In some embodiments, the threaded connecting section 11 is an external threaded section, the external threaded section is connected with the first connector 30, and a length of the external threaded section is greater than a length of an internal threaded section of the first connector 30 such that stable connection can be convenient. The anti-disassembly connector is screwed clockwise for sealing, and cannot be opened counterclockwise and disassembled.

In some embodiments, two bosses 20 are provided, and the two bosses 20 are symmetrically disposed at the end of the connecting portion 10 or the circumferential edge of the connecting portion 10. Through such structure arrangement, a structure layout is optimized, compactness of structure arrangement is improved, and operation is convenient.

Embodiment 2 of the disclosure provides an anti-disassembly connector. The anti-disassembly connector includes a connecting portion 10 and a boss 20, and a threaded connecting section 11 is disposed on the connecting portion 10. The boss 20 protrudes from a peripheral wall of the connecting portion 10, the boss 20 extends along a circumferential edge of the connecting portion 10 or the peripheral wall of the connecting portion 10, the boss 20 has a force-bearing surface 21 and a force-releasing surface 22 that are disposed opposite to each other, at least one boss 20 is provided, and a gap between the boss 20 and the connecting portion 10 forms a clamping interval. A force-bearing sideline 211 is formed on a side of the force-bearing surface 21 away from an inner wall of the connecting portion 10, a length of the force-bearing sideline 211 is L, and 5 mm < L < 20 mm.

A main difference between the anti-disassembly connector in the Embodiment 2 and the anti-disassembly connector in Embodiment 1 is a difference in clamping interval. In some embodiments, when the operating tool performs screwing during operation, one acting end of the operating tool acts on the force-bearing sideline 211, and the other acting end of the operating tool acts on the peripheral wall of the connecting portion 10. By setting the length of the force-bearing sidelines 211 within the above range, contact positions between the operating tool and the force-bearing sidelines 211 can be ensured, stable force application of the operating tool can be ensured, and stability of operation is improved. When reverse operation is performing, the operating tool will move along the force-bearing sidelines to deviate from the anti-disassembly connector such that disassembly cannot be achieved. Therefore, the technical problem that a pipe joint is easily disassembled due to misoperation in the art known to inventors can be solved by means of the anti-disassembly sleeve .

In some embodiments, the anti-disassembly connectors in the above embodiments can be used in an air conditioner stop valve.

It can be seen from the above description that the above embodiments of the disclosure achieve technical effects as follows: the structure is simple, disassembly is prevented, and the function is stable.

It should be noted that terms used herein are merely for describing particular embodiments and are not intended to limit illustrative embodiments according to the disclosure. As used herein, singular is also intended to include plural unless the context clearly points out singular or plural. In addition, it should be understood that terms "comprise" and/or "include", used in the description, indicate the presence of features, steps, operations, devices, components and/or combinations of the foregoing.

Unless specifically stated otherwise, relative arrangements, numerical expressions and values of components and steps stated in these examples do not limit the scope of the disclosure. Moreover, it should be understood that sizes of various parts shown in figures are not drawn according to an actual scale for ease of description. Technique, methods and devices known to those of ordinary skill in the related art may not be discussed in detail, but should be considered as part of the authorized description where appropriate. In all instances shown and discussed herein, any specific value should be interpreted as merely illustrative rather than limitative. Thus, other instances of the illustrative examples can have different values. It should be noted that similar numerals and letters denote similar items in the following accompanying drawings, and therefore once a certain item is defined in one figure, it is not required to be further discussed in the subsequent figures.

In the description of the disclosure, it should be understood that orientation or positional relations indicated by orientation words such as "front", "back", "up", "down", "left", "right", "transverse", "vertical", "perpendicular", "horizontal", "top" and "bottom" are generally based on orientation or positional relations shown in the accompanying drawings, and are for the convenience of describing the disclosure and simplifying the description only. Unless otherwise stated, these orientation words do not indicate or imply that devices or elements indicated thereby must have particular orientations or must be constructed and operated in particular orientations and therefore cannot be construed as limiting the scope of protection of the disclosure. Orientation words "inner" and "outer" refer to an interior and an exterior relative to an outline of each component.

For ease of description, spatial relative terms such as "over", "above", "on an upper surface" and "on" can be used herein to describe spatial positional relations of one device or feature with other devices or features as shown in the figures. It should be understood that the spatial relative terms are intended to include different orientations in use or operation in addition to the orientations of the devices described in the figures. For example, if the device in the accompanying drawings is inverted, the device described as "above" or "over" another device or structure would then be positioned "below" or "under" another device or structure. Thus, the illustrative term "above" can include two orientations of "above" and "below." The device can also be located in other different manners (of being rotated by 90 degrees or being located in other orientations), and the spatial relative description used herein is interpreted accordingly.

In addition, it should be noted that use of words such as "first" and "second" to define parts is only for the purpose of conveniently distinguishing corresponding parts. Unless otherwise stated, the above words do not have special meanings, and therefore cannot be understood as limiting the scope of protection of the disclosure.

The examples mentioned above are merely preferred examples of the disclosure, and are not intended to limit the disclosure, and various modifications and changes can be made on the disclosure by those skilled in the art. Any modification, equivalent substitution, improvement, etc. within the spirit and principles of the disclosure should fall within the scope of protection of the disclosure.

## Claims

1. An anti-disassembly connector, comprising:
a connecting portion (10), wherein a threaded connecting section (11) is disposed on the connecting portion (10); and
bosses (20), wherein the bosses (20) protrude from an end of the connecting portion (10) or a peripheral wall of the connecting portion (10), each of the bosses (20) extends along a circumferential edge of the connecting portion (10) or a peripheral wall of the connecting portion (10), each of the bosses (20) has a force-bearing surface (21) and a force-releasing surface (22) that are disposed opposite to each other, at least two bosses (20) are arranged, two bosses (20) are disposed at intervals along the circumferential edge of the connecting portion (10) or the peripheral wall of the connecting portion (10), and a gap between two adjacent bosses (20) forms a clamping interval; and
a force-bearing sideline (211) is formed on a side of the force-bearing surface (21) away from an inner wall of the connecting portion (10), a length of the force-bearing sideline (211) is L, and 5 mm < L < 20 mm.

2. The anti-disassembly connector as claimed in claim 1, wherein the force-bearing sideline (211) is parallel to an axis of the connecting portion (10).

3. The anti-disassembly connector as claimed in claim 1, wherein
the force-bearing surface (21) is a flat surface, and the force-bearing surface (21) is parallel to an axis of the connecting portion (10); and/or
the force-releasing surface (22) is a curved surface.

4. The anti-disassembly connector as claimed in claim 1, wherein the force-releasing surface (22) is a curved surface, and the force-releasing surface (22) recesses toward an interior of a boss (20).

5. The anti-disassembly connector as claimed in claim 1, wherein an included angle between the force-releasing surface (22) and a radial section of the connecting portion (10) is α, and 20° ≤ α < 50°.

6. The anti-disassembly connector as claimed in claim 1, wherein
a junction of the force-bearing surface (21) and the connecting portion (10) is a circular arc transition; and/or
a junction of the force-releasing surface (22) and the connecting portion (10) is a circular arc transition.

7. The anti-disassembly connector as claimed in claim 1, wherein each of the bosses (20) further comprises an outer cambered surface (23), the outer cambered surface (23) is disposed between the force-bearing surface (21) and the force-releasing surface (22), and a junction between the outer cambered surface (23) and the force-releasing surface (22) is a circular arc transition.

8. The anti-disassembly connector as claimed in claim 1, wherein each of the bosses (20) has a reinforcing portion, a reinforcing end face (24) is formed at an end of the reinforcing portion away from the threaded connecting section (11), and the reinforcing end face (24) is parallel to an end face of the connecting portion (10); and a machining plane (13) is disposed at the clamping interval close to the threaded connecting section (11) and facing the reinforcing end face (24), and the machining plane (13) is parallel to the reinforcing end face (24).

9. The anti-disassembly connector as claimed in claim 1, wherein two bosses (20) are arranged, and the two bosses (20) are symmetrically disposed at the end of the connecting portion (10) or the circumferential edge of the connecting portion (10).

10. An anti-disassembly connector, comprising:
a connecting portion (10), wherein a threaded connecting section (11) is disposed on the connecting portion (10); and
a boss (20), wherein the boss (20) protrudes from a peripheral wall of the connecting portion (10), the boss (20) extends along a circumferential edge of the connecting portion (10) or the peripheral wall of the connecting portion (10), the boss (20) has a force-bearing surface (21) and a force-releasing surface (22) that are disposed opposite to each other, at least one boss (20) is arranged, and a gap between the boss (20) and the connecting portion (10) forms a clamping interval; and
a force-bearing sideline (211) is formed on a side of the force-bearing surface (21) away from an inner wall of the connecting portion (10), a length of the force-bearing sideline (211) is L, and 5 mm < L < 20 mm.
